# EUROPEAN PATENT SPECIFICATION

(11) **EP 0 722 055 B1**
(45) Date of publication and mention of the grant of the patent: **03.03.1999**
(21) Application number: 94927796.6
(22) Date of filing: 28.09.1994
(51) Int. Cl.: F16H 47/04, F16H 61/04

(54) **SPEED CHANGING METHOD FOR A MECHANICAL-HYDRAULIC TRANSMISSION**
METHODE FÜR DEN GANGWECHSEL IN EINEM MECHANISCH-HYDRAULISCHEN GETRIEBE
PROCEDE DE CHANGEMENT DE VITESSE POUR TRANSMISSION MECANIQUE-HYDRAULIQUE

(30) Priority: 28.09.1993 JP 240879/93
(43) Date of publication of application: 17.07.1996
(73) Proprietor: KOMATSU LTD., Minato-ku Tokyo 107 (JP)
(72) Inventor: MITSUYA, Hiroyuki, Awazu Factory, Kabushiki Kaisha, Komatsu-shi, Ishikawa-ken 923-03 (JP)
(74) Representative: Grünecker, Kinkeldey, Stockmair & Schwanhäusser Anwaltssozietät
(86) International application number: JP9401605
(87) International publication number: WO9509315

(56) References cited:
- EP-A- 0 558 748
- JP-A- 4 203 652
- JP-T-57 500 507
- US-A- 3 596 535
- US-A- 3 763 718
- US-A- 5 139 465

## Description

The present invention relates to a method for shifting a mechanical hydraulic power transmission, with the features cited in the preamble of claim 1. For example, this method can be applied to a mechanical hydraulic power transmission of a bulldozer

A method of this kind is disclosed in EP 0558748A1 as well as in the Japanese patent application number Heisei 2-330214 (Japanese unexamined patent application (Kokai) number Heisei 4-203652) preliminarily filed by the owner of the present invention.

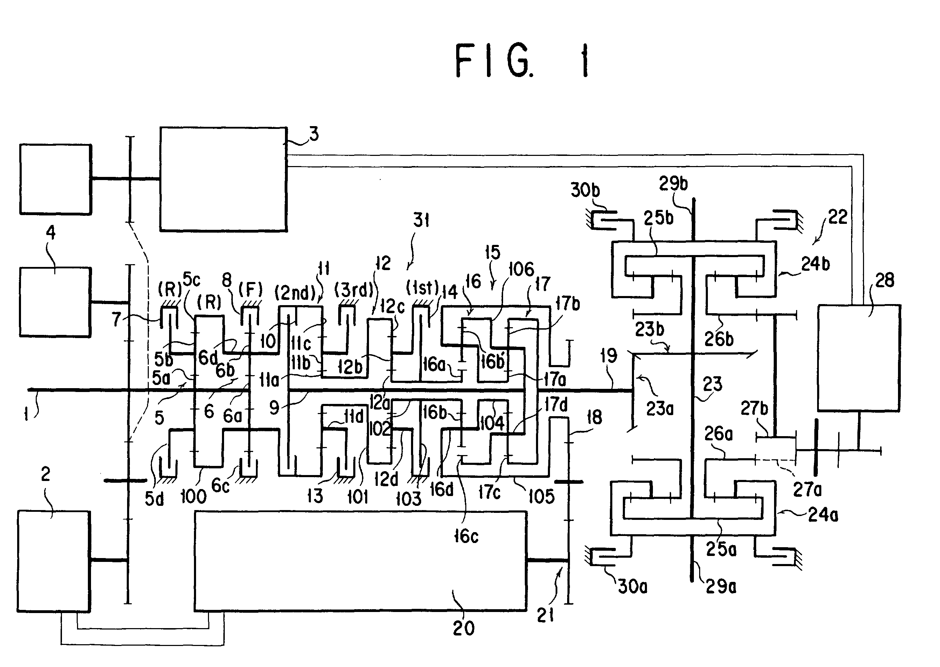

Hereinafter, the construction and operation of the mechanical-hydraulic power transmission disclosed in the above-identified application will be discussed with reference to Figs. 1 to 4.

In Fig. 1, 1 denotes a power input shaft of a mechanical-hydraulic power transmission coaxially connected to an output shaft of a not shown prime mover. 2 and 3 respectively denote first and second variable hydraulic pumps coupled with the power input shaft 1 via a gear train. 4 denotes a charge pump similarly coupled with the power input shaft 1 via a gear train.

On the power input shaft 1, two sun-and-planetary gear trains 5 and 6 for backward (reverse rotation) and forward (normal rotation) driving are provided in the axial direction.

The sun-and-planetary gear train 5 for backward driving is constituted of a sun gear 5a coupled with the power input shaft 1, a carrier 5d having a backward clutch 7 for selectively restricted from free rotation, a planetary gear 5b supported on the carrier 5d and meshed with the sun gear 5a, and a ring gear 5c meshing with the planetary gear 5b. By restricting free rotation of the carrier 5d, revolution of the planetary gear 5b is restricted to transmit a power to the ring gear 5c from the sun gear 5a with converting the rotating direction to reversed direction.

The sun-and-planetary gear train 6 for forward driving is constituted of a sun gear 6a coupled with the power input shaft 1, a carrier 6d integrated with the ring gear 5c of the sun-and-planetary gear train 5 for backward driving, a planetary gear 6b supported by the carrier 6d and meshing with the sun gear 6a, a ring gear 6c meshing with the planetary gear 6b and a forward clutch 8 selectively restricting free rotation of the ring gear. By restricting free rotation of the ring gear 6c, the power is transmitted from the sun gear 6a to the carrier 6d by autorotation and revolution of the planetary gear 6b with rotation in the same rotating direction as the sun gear.

A first coupling member 100 constituted of the ring gear 5c of the sun-and-planetary gear train 5 and the carrier 6d of the sun-and-planetary gear train 6, is included in a transmission speed shifting device. With respect to the first coupling member 100, a second speed clutch 10 and first and second sun-and-planetary gear trains 11 and 12 for third transmission speed ratio are arranged in series in the axial direction.

The second speed clutch 10 selectively couples the first coupling member 100 and an intermediate shaft 9 for transmission of the power to the intermediate shaft 9.

The first sun-and-planetary gear train 11 for the third speed ratio is designed to transmit the power from the power input shaft 1 to a sun gear 11a at a speed increasing ratio of a ring gear 11c versus the sun gear 11a by providing a ring gear 11c on the first coupling member 100, meshing the ring gear 11c with a planetary gear 11b supported on a carrier 11d which is selectively restricted rotation by a third speed clutch 13, meshing the planetary gear 11b and the sun gear 11a, and stopping revolution of the planetary gear 11b by the third speed clutch.

The power thus introduced is accelerated by the second sun-and-planetary gear train 12 for the third speed ratio.

Namely, the second sun-and-planetary gear train 12 for third speed ratio comprises a ring gear 12c integrally coupled with the sun gear 11a of the first sun-and-planetary gear train 11 for the third speed ratio by a tubular second coupling member 101, a stationary carrier 12d, a planetary gear 12b supported on the stationary carrier 12d and meshing with the ring gear 12c, and a sun gear 12a meshing with the planetary gear 12b. The second sun-and-planetary gear train 12 is designed to transmit the power transmitted from the sun gear 11a through the second coupling member 101 to the sun gear 12a at a speed increasing ratio of the ring gear 12c versus the sun gear 12a by causing autorotation of the planetary gear 12b.

The mechanical power is selectively transmitted to a power output portion from the intermediate shaft 9 and the sun gear 12a.

The power output portion is formed by a planetary differential gear unit 15. The planetary differential gear unit 15 is constituted of first and second differential sun-and-planetary gear trains 16 and 17 arranged at the output side of the intermediate shaft 9 in coaxial fashion relative to the intermediate shaft 9.

The first differential sun-and-planetary gear train 16 of the planetary differential gear unit 15 is of a double planetary gear type, in which two planetary gears 16b and 16b' which mesh with each other, are arranged in a carrier 16d. One of the planetary gears 16b is meshed with a sun gear 16a, and the other planetary gear 16b' is meshed with a ring gear 16c.

On the other hand, the second differential sun-and-planetary gear train 17 is of a single planetary gear type, which comprises a sun gear 17a meshing with a planetary gear 17b mounted to a carrier 17d, and a ring gear 17c meshing with the planetary gear 17b.

The sun gear 16a of the first differential sun-and-planetary gear train 16 is integrated with the sun gear 12a of the second sun-and-planetary gear train 12 for the third speed ratio by a tubular third coupling member 102 and thus is coupled with a transmission system of a mechanical power. Then, the third coupling member 102 has a clutch hub 103 extending in radial direction at substantially intermediate portion on the outer peripheral portion. The clutch hub 103 is adapted to engage with a first speed brake 14.

The carrier 16d of the first differential sun-and-planetary gear train 16 is coupled with the sun gear 17a of the second differential sun-and-planetary gear train 17 via a tubular fourth coupling member 104. Also, the carrier 16d is also coupled with a variable hydraulic motor 20 of a static hydraulic power transmitting device via a gear train 21 including a tubular fifth coupling member 105 and a gear 18 integrated with the fifth coupling member 105. By this, the first and second differential sun-and-planetary gear trains 16 and 17 are coupled with an input system of the static hydraulic power transmitting device.

The second differential sun-and-planetary gear train 17 has the carrier 17d coupled with the intermediate shaft 9. By this, the second differential sun-and-planetary gear train 17 is coupled with a transmission system of the mechanical power in other system. On the other hand, the ring gear 17c is coupled with an output shaft 19.

In the first and second differential sun-and-planetary gear trains 16 and 17, the ring gear 16c of the first differential sun-and-planetary gear train 16 and the carrier 17d of the second differential sun-and-planetary gear train 17 are coupled via a tubular sixth coupling member 106.

The output shaft 19 is coaxially positioned in series to the intermediate shaft 9 and has a bevel gear 23a at the axial end.

The variable hydraulic motor 20 is connected to a variable hydraulic pump 2 via a piping.

22 denotes a steering device. An input shaft 23 of the steering device 22 is arranged perpendicularly to the output shaft 19 of the planetary differential gear unit 15 so that the power is input from the output shaft 19 via a bevel gear 23b meshing with the bevel gear 23a. At both axial ends of the input shaft 23, left and right differential sun-and-planetary gear trains 24a and 24b for steering are arranged. These differential sun-and-planetary gear trains 24a and 24b have first input members 25a and 25b coupled with the ends of the input shaft 23. On the other hand, among second input members 26a and 26b of respective differential sun-and-planetary gear trains 24a and 24b, one of the second input members 26a is coupled with an output shaft of a hydraulic motor 28 for steering operation via a normal rotation gear train 27a. On the other hand, the other second input member 26b is connected to the output shaft of a hydraulic motor 28 for steering operation via a reverse rotation gear train 27b.

The output shafts 29a and 29b of both differential sun-and-planetary gear trains 24a and 24b for steering are connected to not shown left and right traveling wheel axles. 30a and 30b denotes left and right brakes. The second hydraulic motor 28 is connected to a second variable hydraulic pump 3 via a piping and is designed to be driven by a hydraulic discharge pressure of the hydraulic pump 3.

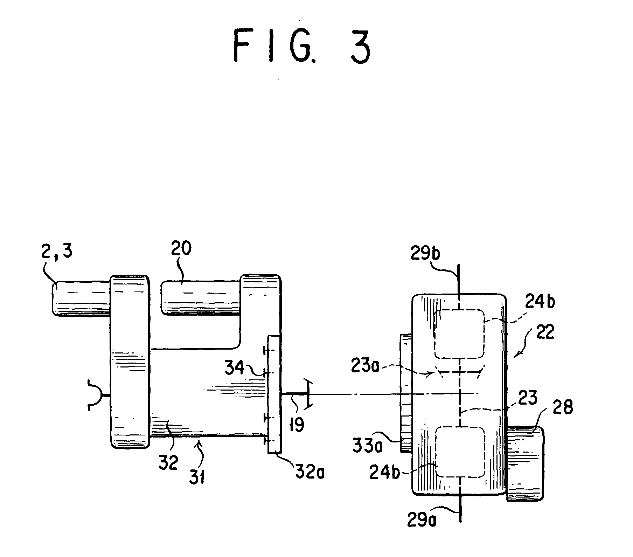

On respective components as set forth above, the power input shaft 1, the sun-and-planetary gear trains 5 and 6 for backward and forward driving, second speed clutch 10, the sun-and-planetary gear trains 11 and 12 for the third speed ratio, third and first speed clutches 13 and 14, and the planetary differential gear unit 15 are housed within a casing 32 as a part of the mechanical power transmitting device 31, as shown in Figs. 1 and 3.

On the other hand, the steering device 22 is similarly housed within a casing 33, as shown in Fig. 3.

The rear end portion of the casing 32 of the mechanical power transmitting device 31 and the front end portion of the casing 33 of the steering device 22 are provided with mutually engageable and disengageable flange portions 32a and 33a. Both flange portions 32a and 33a are disengageably coupled by a bolt 34.

The operation of the mechanical-hydraulic power transmission constructed as set forth above will be discussed.

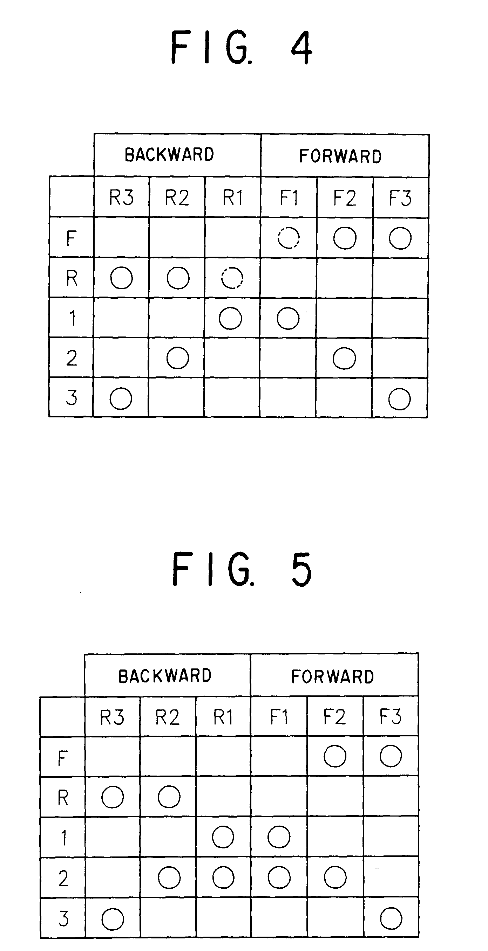

The mechanical-hydraulic power transmission has respectively three transmission speed modes in respective of forward and backward directions and performs sequentially variable power transmitting function. Engagement of the clutches at respective transmission speed mode is established as shown in Fig. 4.

The first transmission speed mode is established by engaging the first speed clutch 14 and disengaging selectively operable second and third speed clutches 10 and 13. Thus, a rotation speed control in the forward and backward direction is performed only by the static hydraulic power transmitting device.

The second transmission speed mode is established by disengaging the first speed clutch 14, and by engaging one of backward and forward clutches 7 and 8 for selecting switching of rotating direction of the mechanical power input shaft 1 and the second speed clutch 10, and thus engaging two clutches in total. This becomes the second transmission speed mode of the mechanical-hydraulic type power transmission.

The third transmission speed mode is established by disengaging the second speed clutch 10 and engaging one of the backward and forward clutches 7 and 8 selecting switching of rotating direction of the mechanical power input shaft 1 and the third speed clutch 13, and thus engaging two clutches in total. This becomes the third transmission speed mode of the mechanical-hydraulic type power transmission.

Next, discussion will be given for the operation of the static hydraulic power transmitting device.

The variable hydraulic pump 2 of a pump motor of the static hydraulic power transmitting device is a variable swash type in bidirectional swing, and the variable hydraulic motor 20 is a variable swash type in unidirectional swing. The inlets and outlets of these are communicated to each other (in the following discussion, the variable hydraulic pump and variable hydraulic motor are simply referred to as pump and motor).

When a swash plate angle of the pump 2 is increased from 0° toward positive direction under the condition where the a swash plate angle of the motor 20 is maximum, the revolution speed of the motor 20 is increased in normal direction from 0. At the condition where the swash plate angle of the pump 2 is maximum, if the swash plate angle of the motor 20 is decreased, the revolution speed of the motor 20 is further increased.

Conversely, when the swash plate angle of the pump 2 is increased in the negative direction from the swash plate angle 0°, the revolution speed of the motor 20 is increased in the reverse direction.

Thus, a motor speed ratio (a value derived by dividing the revolution speed of the motor by a rotation speed of the input shaft of the static hydraulic power transmitting device) is varied in stepless manner from positive (forward rotation) to negative (reverse rotation).

Next, discussion will be given for respective transmission speed mode.

### (1) Forward and Backward First Speed Ratio (F1, R1)

Shifting between forward and backward first transmission speed ratio (F1, R1) can be performed only by the static hydraulic power transmitting device.

Namely, only first speed clutch 14 is engaged. By this, the sun gear 16a of the first differential sun-and-planetary gear train 16 of the planetary differential gear unit 15 is fixed. Thus, the planetary differential gear unit 15 becomes to serve as simple reduction gear box.

At this condition, the power of the motor 20 is input to the input gear 18 of the planetary differential gear unit 15 by the gear train 21, and then transmitted to the output shaft 19 via the carrier 16d, the double planetary gears 16b and 16b', the ring gear 16c of the first differential sun-and-planetary gear train 16, the carrier 17d, the planetary gear 17b, the ring gear 17c of the second differential sun-and-planetary gear train 17, in sequence.

At this condition, when the speed ratio of the motor 20 is increased in the positive direction from 0, the power is transmitted to the output shaft 19 via two series of differential sun-and-planetary gear trains 16 and 17 of the planetary differential gear unit 15. The rotation speed of the output shaft 19 is increased from 0 in positive direction. Conversely, speed ratio of the motor 20 is increased from 0 in the negative direction, the rotation speed of the output shaft 19 is increased in the negative direction from 0.

Thus, the speed ratio of the static hydraulic power transmitting device (the value derived by dividing the rotation speed of the output shaft 19 by the rotation speed of the power input shaft 1) is varied in stepless fashion within a range of positive and negative.

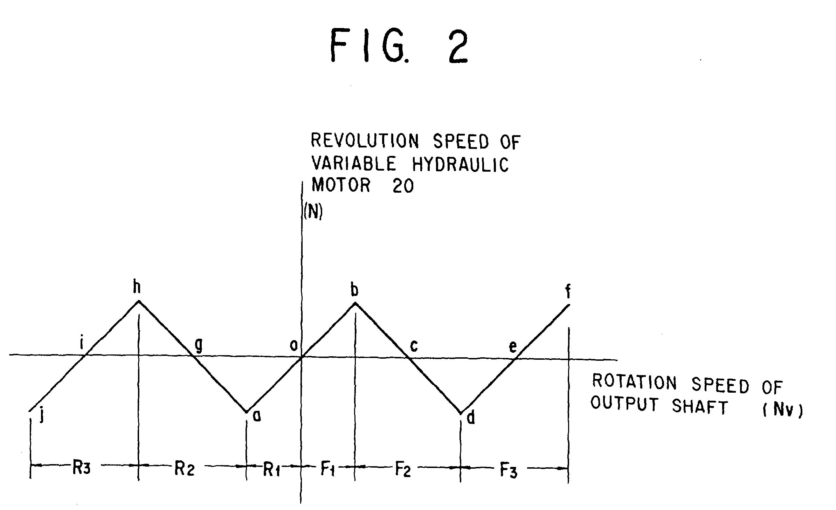

Fig. 2 shows variation of rotation speed Nv (vehicle speed V) of the output shaft 19 relative to variation of the revolution speed of the motor 20. In the operation at the first speed ratio, the rotation speed Nv of the output shaft 19 is controlled in the forward and backward first speed ratios from 0 by controlling the revolution speed N of the motor 20 along a to b.

It should be noted that, in the foregoing operation at the first speed ratio, the forward clutch 8 may be engaged in case of the forward driving and the backward clutch 7 may be engaged in case of the backward driving, across vehicle speed 0. By this, the rotation speed at the first speed ratio becomes specific values e_{F1} and e_{R1}. When the relative rotation speed to the forward or backward second speed clutch 10 becomes zero, smooth transition to forward or backward second speed mode can be established by engaging the second speed clutch 10 and disengaging the first speed clutch 14.

On the other hand, in this case, shifting from the first speed ratio to the second speed ratio can be done by only operation of the second speed clutch to shorten filling time at this time.

### (2) Lower Speed Side of Forward Second Speed Ratio (F2)

When the speed exceeds the first speed range during the forward first speed control, the forward second transmission speed mode is established by disengaging the first speed clutch 14 and engaging forward clutch 8 and the second speed clutch 10.

By this, the rotation of the power input shaft 1 is transmitted to the intermediate shaft 9 at a reduced speed from the sun-and-planetary gear train 6 for forward driving via the second speed clutch 10. Then, the rotation of the power input shaft is transmitted from the intermediate shaft 9 to the output shaft 19, via the carrier 17d, the planetary gear 17b and the ring gear 17c of the second differential sun-and-planetary gear train 17 of the planetary differential gear unit 15.

On the other hand, at this time, a part of the power transmitted to the planetary differential gear unit 15 is fed back to the input gear 18 of the planetary differential gear unit 15 from the planetary gear 17b of the second differential sun-and-planetary gear train 17 via the sun gear 17a and the carrier 16d of the first differential sun-and-planetary gear train 16. By this, the motor 20 is driven to feed the pressurized fluid to the variable hydraulic pump 2. The energy of the pressurized fluid is converted into an energy of revolution by the variable hydraulic pump 2 and then returned to the input shaft 1.

Namely, when the speed ratio of the motor is positive at the forward second speed ratio, the motor 20 effects pumping operation to drive the pump 2. The power generated in the pump is composed with the power from the power input shaft 1 and then transmitted to the planetary differential gear unit 15. Then, a part of the power from the planetary differential gear unit 15 drives the motor 20 and remaining power drives the output shaft 19.

At this time, the revolution speed of the motor 20 is varied along b - c of Fig. 2. The point c is the position where the swash plate angle of the motor 20 becomes zero degree and the revolution speed becomes zero.

### (3) Higher Speed Side of Forward Second Ratio (F2)

When the revolution speed of the motor 20 is varied along c - d of Fig. 2 and the speed ratio of the motor is increased in the negative direction, the output shaft 19 is accelerated to be at a higher speed side of the second speed ratio.

Namely, at the condition where the speed ratio of the motor is negative, a part of the power from the power input shaft 1 drives the pump 2, and is transmitted to the planetary differential gear unit 15 via the motor 20. The remaining power is transmitted to the planetary differential gear unit 15 from the sun-and-planetary gear train 6 via the second speed clutch 10 and the intermediate shaft 9. Then, the output shaft 19 is driven with composing both power at the planetary differential gear unit 15.

### (4) Lower Speed Side of Forward Third Speed Ratio (F3)

During the forward second speed ratio control, when the speed ratio of the motor 20 is increased in the negative direction to be a specific value e_{F2}, the relative rotation speed of the third speed clutch 13 becomes zero. At this time, by engaging the third speed clutch 13 and disengaging the second speed clutch 10, the forward third speed mode is established.

By this, the power of the power input shaft 1 is input to the sun gear 16a of the first differential sun-and-planetary gear train 16 of the planetary differential gear unit 15 from the sun-and-planetary gear train 6 for forward driving via the first sun-and-planetary gear train 11 and the second sun-and-planetary gear train 12 for the third speed ratio. Then, in the planetary differential gear unit 15, the powers of the first and second differential sun-and-planetary gear trains 16, 17 are composed to be transmitted to the output shaft 19. At this condition, when the speed ratio of the motor is lowered to approach zero, the rotation speed of the output shaft 19 is increased.

At this time, the revolution speed of the motor 20 can be varied along d - e of Fig. 2.

Thus, at the condition where the speed ratio of the motor at the forward third speed ratio is negative, the motor 20 serves to drive the pump 2 by the pumping effect. The power thus generated is composed with the power from the power input shaft 1 and then transmitted to the first differential sun-and-planetary gear train 16 of the planetary differential gear unit 15. Then, a part of the power from the first differential sun-and-planetary gear train 16 drives the motor 20. Then, the remaining power drives the output shaft 19 via the second differential sun-and-planetary gear train 17.

### (5) Higher Speed Side of Forward Third Speed Ratio (3F)

When the direction of revolution of the motor 20 is switched into normal rotation direction and the speed ratio of the motor is varied along e - f of Fig. 2, namely, at the condition where the speed ratio is positive at the forward third speed ratio, a part of the power from the power input shaft 1 drives the pump 2 and is transmitted to the first differential sun-and-planetary gear train 16 of the planetary differential gear unit 15 via the motor 20. The remaining power is similarly transmitted to the first differential sun-and-planetary gear train 16 of the planetary differential gear unit 15 via respective sun-and-planetary gear trains. Then, at the first differential sun-and-planetary gear train 16, both power are composed for driving the output shaft 19 via the second differential sun-and-planetary gear train 17. Thus, higher speed side at the forward third speed ratio is established.

At the third speed ratio, when the speed ratio of the motor is reduced from the positive high value and further increased in the negative direction to reach the specific value e_{F2} (the same as the speed ratio at shifting from the forward second speed ratio to the forward third speed ratio), the relative rotation speed of the second speed clutch 10 becomes zero. At this time, by engaging the second speed clutch 10 and disengaging the third speed clutch 13, the forward second speed ratio is established.

While the foregoing discussion for the operation in (2), (3), (4), (5) shows respective lower speed sides and higher speed sides of forward second to third speed ratios, the lower speed sides and higher speed sides in the backward second speed ratio and the backward third speed ratio can be controlled in the similar manner by engaging the backward (R) clutch 7 in place of the forward (F) clutch 8, in relation to the case of forward driving.

At this time, the revolution speed of the variable hydraulic motor 20 varies along a - g at the lower speed side of the backward second speed ratio (R2), along g - h at the higher speed side of the backward second speed ratio, along h - i at the lower speed side of the backward third speed ratio (R3) and along i - j at the higher speed side of the backward third speed ratio, as shown in Fig. 2.

As one example of the backward drive mode, the backward second speed mode will be discussed hereinafter.

At the backward second speed ratio, rotation of the power input shaft 1 is transmitted to the second differential sun-and-planetary gear train 17 of the planetary differential gear unit 15 at a reduced speed via the sun-and-planetary gear train 5 for backward driving and the second speed clutch 10. On the other hand, revolution of the motor 20 is also transmitted to the second differential sun-and-planetary gear train 17 at the reduced speed. Then, in the second differential sun-and-planetary gear train 17, both powers are composed and transmitted to the output shaft 19. At this condition, when the speed ratio of the motor is increased in the positive direction, the rotation speed of the output shaft 19 is increased in the negative direction.

When the speed ratio of the motor is negative at the backward second speed ratio, the motor 20 effects pumping function to drive the pump 2. The power thus generated is composed with the power from the power input shaft 1 and transmitted to the second differential sun-and-planetary gear train 17 of the planetary differential gear unit 15 via the sun-and-planetary gear train 5 for backward driving and the second speed clutch 10. Then, a part of the power from the second differential sun-and-planetary gear train 17 drives the motor 20, and remaining power drives the output shaft 19.

On the other hand, when the speed ratio of the motor is positive, a part of the power from the power input shaft 1 drives the pump 2 and is transmitted to the second differential sun-and-planetary gear train 17 of the planetary differential gear unit 15 via the motor 20. The remaining power is transmitted to the second differential sun-and-planetary gear train 17 via the sun-and-planetary gear train 5 for backward driving and the second speed clutch 10. Then, both powers are composed in the second differential sun-and-planetary gear train 17. With the composite power, the output shaft 19 is driven.

When the speed ratio is increased in the negative direction at the backward second speed ratio to be a specific value e_{R2}, the relative rotation speed of the third speed clutch 13 becomes zero. At this time, by engaging the third speed clutch 13 and disengaging the second speed clutch 10, the backward third speed ratio is established.

On the other hand, when the speed ratio at the backward second speed ratio is reduced toward zero to reach the specific value e_{R1} (the same speed ratio as that upon shifting from the backward first speed ratio to the backward second speed ratio), the relative rotation speed of the first speed clutch 14 becomes zero. At this condition, by engaging the first speed clutch 14 and disengaging the second speed clutch 10, the backward first speed ratio is established.

As set forth above, the power of the prime mover is transmitted to the output shaft 19 of the planetary differential gear unit 15. However, the output of the output shaft 19 is transmitted to the input shaft 23 of the steering device 22 via the bevel gear mechanism 23a, and output to the left and right output shafts 29a, 29b via the left and right differential sun-and-planetary gear trains 24a, 24b for steering.

At this time, by controlling the left and right differential sun-and-planetary gear trains 24a, 24b for steering by the hydraulic motor 28 for steering, a difference of the rotation speed of the left and right output shafts 29a, 29b is caused for permitting turning of the vehicle.

In the foregoing steering device 22, a casing 33 housing the steering device is detachably mounted on the casing 32 of the mechanical power transmitting device 31. Then, the case 33 is easily separated from the casing 32 of the mechanical power transmitting device 31. By this, the mechanical power transmitting device 31 and the steering device 22 can be replaced other one. It should be noted that, in this case, it is necessary to employ the same bevel gear mechanism 23a coupling the output shaft 19 and the input shaft 23.

In the mechanical-hydraulic power transmission in the prior application, in the shifting operation, at the forward or backward first speed ratio, only the first speed clutch is engaged, as shown in Fig. 4. At this time, since the speed control is performed only by the static hydraulic power transmitting device formed of the pump and the motor, the relative rotation speed in the forward or backward driving upon shifting from the first speed ratio to the second speed ratio cannot be the specific value at the speed ratio 1 → 2 shifting and is maintained in so-called non-determined rotation speed state. When the forward or backward clutch is engaged for performing the speed ratio 1 → 2 shifting at this condition, shift shock may be caused.

Concerning to this, in the system in the prior application, it is also implemented that as previously discussed with respect to the operation at the forward and backward first speed ratio, in the first speed mode, the forward and backward clutches 8 and 7 are engaged in addition to the first speed clutch so that the rotation speed at the first speed ratio may becomes the specific rotation speed upon the speed ratio 1 → 2 shifting for performing smooth shifting.

However, with such construction, when the forward and backward clutches 8 and 7 are switched at the vehicle speed zero, the clutch which is placed in the engaged state as a result of switching, may engage at high relative rotation speed to cause shift shock and impact noise due to backlash of the gear or so forth.

Detailed discussion will be given for these problems.

Upon shifting from forward driving to backward driving, the forward clutch 8 is engaged before shifting and thus the ring gear 6c of the sun-and-planetary gear train for forward driving is held stationary. Holding the ring gear 6c stationary, the rotation speed of the carrier 6d is simply determined by the rotation speed of the sun gear 6a of the sun-and-planetary gear train 6 for forward driving on the power input shaft 1. Rotation of the carrier 6d is transmitted to the ring gear 5c of the sun-and-planetary gear train 5 for backward driving engaging thereto. Then, in the sun-and-planetary gear train 5 for backward driving, since the rotation speeds of the sun gear 5a and the ring gear 5c on the power input shaft 1 is determined, the rotation speed of the carrier 5d supporting the planetary gear 5b, i.e. the relative rotation speed of the backward clutch 7 is determined in straightforward manner. In case of possible gear ratio of the sun-and-planetary gear train which can be normally taken, this rotation speed becomes large. Accordingly, when the forward clutch 8 is disengaged from this condition, respective gears maintains rotation at the rotation speed upon disengaging of the forward clutch due to inertia force. Therefore, the relative rotation speed at the backward clutch 7 becomes large. Since the backward clutch 7 is engaged with maintaining the condition set forth above, a shift shock is caused in a magnitude corresponding to the rotational energy of the backward clutch 7. Also, an impact noise may be generated due to backlash of the gears or so forth. On the other hand, upon switching from the backward driving to the forward driving, the forward clutch 8 should engage in the condition where the relative rotation speed thereof is large to cause shift shock and impact noise. Thus, in the system of the prior application, upon shifting of the vehicle speed near zero, it should cause drawback of causing shift shock and impact noise.

US-3,596,535 discloses a method for shifting a mechanical hydraulic power transmission, in which a mechanical power transmitting device and a static hydraulic power transmitting device are arranged between a prime mover and an output shaft in parallel. The mechanical power transmitting device comprises a plurality of stages of sun-and-planetary gear trains for four different speed ratios with one speed clutch for each speed ratio. A forward and a reverse drive clutch are connected to the input shaft. In the lowest first speed ratio, the forward drive clutch or reverse drive clutch is engaged and the first speed clutch is engaged while all other speed clutches are disengaged.

It is the object of the present invention to provide a shifting method of the above-mentioned type which can reduce shift shock and noise generation upon shifting of the vehicle speed near zero and reduces shift shock and noise generation upon shifting of the first speed ratio to the second speed ratio.

This object is attained with a method of the above-mentioned type which is characterised in that the first speed clutch and the second speed clutch are simultaneously maintained engaged at the first speed ratio.

This enables a smoother shifting from the first speed ratio to the second speed ratio. With the second speed clutch being engaged at the first speed ratio, the second speed clutch is better synchronised with the speed ratio at the time of shifting. Simultaneously, the backward and forward clutch can be better synchronised. Inertia forces which may create a shock during the shifting operation are reduced. Thus, shift shock and noise generation upon shifting from the first speed ratio to the second speed ratio are reduced.

Advantageous features and embodiments are cited in the dependent claims.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the present invention, but are for explanation and understanding only.

In the drawings:
Fig. 1 is a skeleton diagram of a gear train showing one embodiment of a mechanical-hydraulic power transmission, for which a method of the present invention is applied;
Fig. 2 is a chart showing variation of rotation speed of an output shaft in relation to variation of revolution speed of a hydraulic motor of a static hydraulic power transmitting device of a system shown in Fig. 1;
Fig. 3 is an explanatory illustration showing the power transmission and a steering device in the system of Fig. 1, in exploded manner;
Fig. 4 is an explanatory illustration showing an engaging condition of a clutch at respective speed ratio in the conventional method; and
Fig. 5 is an explanatory illustration showing an engaging condition of a clutch at respective speed ratio in the method of the present invention.

### BEST MODE FOR IMPLEMENTING THE INVENTION

The preferred embodiment of the present invention will be discussed hereinafter. It should be noted that the present invention is an improvement in a shifting method in the mechanical-hydraulic power transmission in the above-identified prior application. For the shifting method according to the present invention, a system illustrated in Figs. 1 and 3 can be employed as is, and a control for a rotation speed of an output shaft as shown in Fig. 2 is performed. In the shown shifting method, engagement of clutch is performed as illustrated in Fig. 5.

Forward and backward first speed ratio (F1 and R1) are established only by the static hydraulic power transmitting device. In this case, the first and second speed clutches 14 and 10 are engaged.

By engagement of the first speed clutch 14, the sun gear 16a of the first differential sun-and-planetary gear train 16 of the planetary differential gear unit 15 is fixed. Therefore, the planetary differential gear unit 15 serves as the simple reduction gear unit.

On the other hand, at this time, while the second speed clutch 10 is also engaged, power transmission is not performed through the second speed clutch 10 since the forward and backward clutches 8 and 7 are held disengaged.

Accordingly, at the first speed ratio, since the first speed clutch and the second speed clutch are in the engaged condition, it is not necessary to switch the forward and backward clutches. Thus, shift shock and noise due to backlash of the gear and so forth at the vehicle speed near zero will never be caused.

On the other hand, by engagement of the second speed clutch 10, since the rotation of the carrier 17d of the second differential sun-and-planetary gear train 17 is transmitted to the sun-and-planetary gear trains for forward and backward driving, the relative rotation speed of the forward and backward clutches 8 and 7 upon shifting to the second speed ratio can be held zero. Accordingly, shift shock upon shifting from the first speed ratio to the second speed ratio will never be caused.

It should be noted that the power transmission in the forward first speed ratio is performed in the completely the same principle to the forward first speed ratio in the prior application.

Shifting methods for forward second and third speed ratio are similar to the above-identified prior application. In case of the forward second speed ratio, the forward clutch 8 and the second speed clutch 10 are engaged. On the other hand, in case of the forward third speed ratio, the forward clutch 8 and the third speed clutch 13 are engaged.

On the other hand, the shifting methods of the backward second and third speed ratio are similar to the above-identified prior application, wherein the backward clutch 7 is engaged and the second speed clutch 10 and the third speed clutch 13 are engaged respectively.

## Claims

1. A method for shifting a mechanical hydraulic power transmission, in which a mechanical power transmitting device and a static hydraulic power transmitting device (2, 20) are arranged between a prime mover (1) and an output shaft (19) in parallel, for transmitting power of the prime mover (1) to the output shaft (19) in stepless fashion, said mechanical power transmitting device having a plurality of stages of sun-and-planetary gear trains (16,17), forward and backward clutches (7, 8) and speed clutches (10,13,14) for shifting respective speed ratios for varying a power transmission path in a plurality of stages of said sun-and-planetary gear trains (16,17), including a first speed clutch (14) for shifting to a first speed ratio in which said power transmission and switching of forward and backward driving is performed by said static hydraulic transmitting device (2, 20), and a second speed clutch (10) for shifting to a second speed ratio, one of said forward and backward clutches (7, 8) and one of said speed clutches (13,14) simultaneously engaging at the second and higher speed ratios,
characterised in that the first speed clutch (14) and the second speed clutch (10) are simultaneously maintained engaged at the first speed ratio.

2. A method according to claim 1, characterised in that the forward and backward clutch for (7, 8) are maintained disengaged in the first speed ratio (16) when the first and second speed clutch (10,14) are engaged.

3. A method according to claim 1 or 2, characterised in that the forward clutch (8) or the backward clutch (7) are synchronised to engage at the condition when the relative rotation speed is zero when shifting from the first speed ratio to the second speed ratio.

## Patentansprüche

1. Eine Methode zum Schalten eines mechanisch-hydraulischen Getriebes, in dem eine mechanische Energieübertragungsvorrichtung und eine statische, hydraulische Energieübertragungsvorrichtung (2, 20) zwischen einem Hauptantrieb (1) und einer Abtriebswelle (19) parallel angeordnet sind, um Energie des Hauptantriebs (1) an die Abtriebswelle (19) in stufenloser Weise zu übertragen, wobei die genannte mechanische Energieübertragungsvorrichtung eine Mehrzahl Stufen von Sonnen-und-Planetengetrieben (16,17), Vorwärts- und Rückwärtskupplungen (7, 8) und Drehzahlkupplungen (10,13,14) zum Schalten entsprechender Gänge aufweist, um einen Energieübertragungsweg in einer Mehrzahl von Stufen der genannten Sonnen-und-Planetengetriebe (16, 17) zu ändern, die eine erste Drehzahlkupplung (14) zum Schalten in einen ersten Gang, in dem die genannte Energieübertragung und Schalten von Vorwärts- und Rückwärtsantrieb durch die genannte statische, hydraulische Übertragungsvorrichtung (2, 20) ausgeführt werden, und eine zweite Drehzahlkupplung (10) zum Schalten in einen zweiten Gang einschließt, wobei eine der genannten Vorwärts- oder Rückwärtskupplung (7, 8) und eine der genannten Drehzahlkupplungen (13,14) gleichzeitig bei den zweiten und höheren Gängen eingreifen, **dadurch gekennzeichnet,** daß die erste Drehzahlkupplung (14) und die zweite Drehzahlkupplung (10) gleichzeitig im ersten Gang eingekuppelt beibehalten werden.

2. Eine Methode gemäß Anspruch 1, **dadurch gekennzeichnet,** daß die Vorwärtsund Rückwärtskupplung (7, 8) in dem ersten Gang (16) ausgekuppelt beibehalten werden, wenn die erste und zweite Drehzahlkupplung (10,14) eingekuppelt sind.

3. Eine Methode gemäß Anspruch 1 oder 2, **dadurch gekennzeichnet,** daß die Vorwärtskupplung (8) oder die Rückwärtskupplung (7) synchronisiert ist, um in dem Zustand einzugreifen, wenn die relative Drehzahl null ist, wenn von dem ersten Gang in den zweiten Gang geschaltet wird.

## Revendications

1. Procédé pour engager une transmission de puissance hydraulique mécanique, dans lequel un dispositif de transmission de puissance mécanique et un dispositif de transmission de puissance hydraulique statique (2, 20) sont agencés entre une machine motrice (1) et un arbre de sortie (19) en parallèle, pour transmettre de la puissance de la machine motrice (1) à l'arbre de sortie (19) de façon sans pas, ledit dispositif de transmission de puissance mécanique ayant une pluralité d'étages à trains d'engrenages planétaires et satellites (16,17), des embrayages avant et arrière (7, 8) et des embrayages de vitesse (10, 13, 14) pour engager des rapports de vitesse respectifs pour modifier un trajet de transmission de puissance dans une- pluralité d'étages desdits trains d'engrenages planétaires et satellites (16, 17), incluant un premier embrayage de première vitesse (14) pour engager un premier rapport de vitesse dans lequel ladite transmission de puissance et la commutation de l'entraînement en avant et en arrière sont réalisées par ledit dispositif de transmission hydraulique statique (2, 20) et un embrayage de seconde vitesse (10) pour engager un second rapport de vitesse, l'un desdits embrayages (7, 8) avant et arrière et l'un desdits embrayages de vitesse (13, 14) opérant simultanément au second rapport de vitesse et à des rapports de vitesse plus élevés, caractérisé en ce que l'embrayage de première vitesse (14) et l'embrayage de seconde vitesse (10) sont simultanément maintenus en coopération au premier rapport de vitesse.

2. Procédé selon la revendication 1, caractérisé en ce que les embrayages avant et arrière (7, 8) sont maintenus hors de coopération dans le premier rapport de vitesse (16) lorsque les embrayages de première et seconde vitesses (10,14) coopèrent.

3. Procédé selon la revendication 1 ou 2, caractérisé en ce que l'embrayage avant (8) ou l'embrayage arrière (7) est synchronisé pour coopérer à la condition lorsque la vitesse de rotation relative est nulle lors de l'engagement du premier rapport de vitesse au second rapport de vitesse.
